Europäisches Patentamt

European Patent Office

Office européen des brevets

(19)

(11) Numéro de publication : **0 026 127
B1**

(12) **FASCICULE DE BREVET EUROPÉEN**

(45) Date de publication du fascicule du brevet :
16.11.83

(51) Int. Cl.³ : **G 02 F    1/13**

(21) Numéro de dépôt : **80401282.1**

(22) Date de dépôt : **09.09.80**

(54) **Dispositif de visualisation à mémoire.**

(30) Priorité : **18.09.79 FR 7923243**

(43) Date de publication de la demande :
**01.04.81 Bulletin 81/13**

(45) Mention de la délivrance du brevet :
**16.11.83 Bulletin 83/46**

(84) Etats contractants désignés :
**DE GB IT NL SE**

(56) Documents cités :
**FR A 2 102 551
FR A 2 275 087
US A 3 675 989**

**SOVIET PHYSICS DOKLADY, vol. 21, no. 8, août
1976 New York US I.G. CHISTIJAKOV et ai. :
« Texture and phase transformations in liquid
crystals produced by electric field and pressure », pages 436-437**

**PHYSICS LETTERS, vol. 56A, no. 2, mars 1976
Amsterdam NL R. RIBOTTA : « Observation of
undulations of layers in the smectic B and H
phases of a liquid crystal », pages 130-132**

**PHYSICAL REVIEW LETTERS, vol. 30, no. 1, 1er
janvier 1973 N.A. CLARK et al. : « Light scattering
by deformation of the plane texture of smectic
and chloesteric liquid crystals », pages 3-6**

**JOURNAL OF PHYSICS D, vol. 11, no. 14, octobre
1978, Letchworth Hertfordshire D. COATES et ai. :
« Electrically induced scattering textures in
smectic A phases and their electrical reversal »,
pages 2025-2034**

(73) Titulaire : **THOMSON-CSF
173, Boulevard Haussmann
F-75379 Paris Cedex 08 (FR)**

(72) Inventeur : **Perbet, Jean-Noel
"THOMSON-CSF" SCPI 173, Bld Haussmann
F-75360 Paris Cedex 08 (FR)**
Inventeur : **Hareng, Michel
"THOMSON-CSF" SCPI 173, Bld Haussmann
F-75360 Paris Cedex 08 (FR)**
Inventeur : **Le Berre, Serge
"THOMSON-CSF" SCPI 173, Bld Haussmann
F-75360 Paris Cedex 08 (FR)**

(74) Mandataire : **Wang, Pierre et al
THOMSON-CSF SCPI 173, Bld Haussmann
F-75379 Paris Cedex 08 (FR)**

## Dispositif de visualisation à mémoire

La présente invention se rapporte aux dispositifs de visualisation à mémoire qui permettent d'inscrire dans un matériau sensible des signes ou des images qui sont ensuite observés soit directement soit par projection sur un écran. Ces signes ou ces images restent inscrits dans ce matériau jusqu'à ce qu'une action extérieure les efface. L'invention concerne également les systèmes de visualisation qui comprennent un tel dispositif.

On sait réaliser des dispositifs de visualisation utilisant comme matériau sensible des cristaux liquides. De tels dispositifs sont notamment décrits dans l'ouvrage intitulé : « Opto-électronique » de Georges Broussaud, et dont la référence ISBN est : 2-225-39-138-6.

Il est connu dans un tel dispositif d'utiliser un matériau smectique préalablement porté dans une phase où il est diffusant et de le rendre transparent en lui appliquant un champ électrique continu ou alternatif. Un tel dispositif est notamment décrit dans le brevet français n° 2.275.087 déposé par la demanderesse le 14 juin 1974 sous le titre : « Dispositif de reproduction d'images en noir et blanc utilisant un matériau présentant une phase smectique et système de télétransmission et téléreprographie mettant en œuvre ce dispositif. »

Dans ce dernier dispositif, on utilise pour rendre le cristal liquide diffusant une source lumineuse dont le faisceau est focalisé sur le dispositif de manière à chauffer le cristal liquide. Celui-ci en se refroidissant en l'absence de champ électrique devient diffusant, et lorsque par contre on applique un tel champ lors du refroidissement il devient plus ou moins transparent selon la valeur du champ appliqué. Pour obtenir ce faisceau lumineux on utilise comme source dans les réalisations pratiques un laser et tout un ensemble de déflecteurs électro-optiques. Ces organes sont encombrants et coûteux et ne permettent pas d'obtenir un dispositif de visualisation susceptible d'être fabriqué à un grand nombre d'exemplaires.

Il est également connu par le document « Journal of Physics D », volume 11, n° 14, octobre 1978, pages 2025 à 2034 d'induire électriquement une texture diffractante dans un cristal liquide smectique avec un champ électrique de basse fréquence créé par des électrodes encadrant la couche de cristal liquide et d'effacer cette texture en substituant à ce champ d'écriture, un champ de haute fréquence qui clarifie cette texture. Les organes d'adressage se réduisent aux électrodes d'encadrement et à des circuits fournissant en alternance les signaux d'écriture et d'effacement mais pour réaliser un affichage sélectif le champ est appliqué localement dans les deux modes de fonctionnement. Il n'est donc pas aisé d'obtenir la texture diffusante dans toute l'étendue de la couche par une seule commande. Le document « Soviet Physics Doklady, volume 21, n° 8, août 1976, pages 436 et 437 indique qu'en appliquant une pression aux verres d'encadrement d'une couche de cristal liquide, on peut induire une structure homéotrope à partir d'une texture polygonale diffusante et qu'en éliminant lentement la pression on peut conserver la structure homéotrope. Si la pression est appliquée à la structure homéotrope, la couche reste transparente, mais si la pression est rapidement supprimée, on observe un changement de texture qui pour une déformation périodique de la couche entraîne une diminution de transparence.

L'action mécanique permettant d'aboutir à une texture diffusante est relativement complexe puisqu'il faut appliquer une pression et la supprimer rapidement.

Le document US-A-3 675 989 montre que l'on peut déranger la structure d'un cristal liquide au moyen d'un cristal piézoélectrique lorsque ce dérangement est produit par cisaillement des plans cristallins. Cependant le cristal liquide se clarifie spontanément puisqu'aucune commande par champ électrique n'est prévue pour obtenir localement cette clarification dans une couche où l'état de diffusion se conserve indéfiniment. L'inconvénient de ce type de dispositif est qu'il faut l'exciter en permanence et sans pouvoir disposer localement dans la couche d'un contraste visuel nécessaire à l'observation d'un graphisme.

Pour pallier ces inconvénients, l'invention propose un dispositif de visualisation à mémoire, du type comprenant une couche de cristal liquide smectique pouvant prendre sous l'action de moyens d'effacement un état diffusant se transformant en un état transparent sous l'action réorientatrice d'un champ électrique, une première et une deuxième lames enserrant cette couche, au moins une seconde électrode supportée par la face de la première lame en contact du cristal liquide, et au moins une première électrode supportée par la face de la deuxième lame en contact du cristal liquide et permettant avec la seconde électrode de soumettre une partie de la couche de cristal liquide à un champ électrique de réorientation, caractérisé en ce que lesdits moyens d'effacement sont des moyens électromécaniques permettant de modifier transitoirement la position de la première lame par rapport à la seconde pour porter en totalité ladite couche de cristal liquide smectique dans un état diffusant uniforme par un déplacement brusque créant une dépression brusque par augmentation de la distance entre lesdites lames ; ladite phase de dépression brusque étant suivie d'un retour lent à la position initiale de ladite première lame par rapport à la seconde.

D'autres particularités et avantages de l'invention apparaîtront clairement dans la description suivante présentée à titre d'exemple non limitatif et faite en regard des figures annexées suivantes :

2

la figure 1, qui représente une vue de dessus d'une cellule de visualisation selon l'invention ;

la figure 2, qui représente une coupe de la cellule de la figure 1.

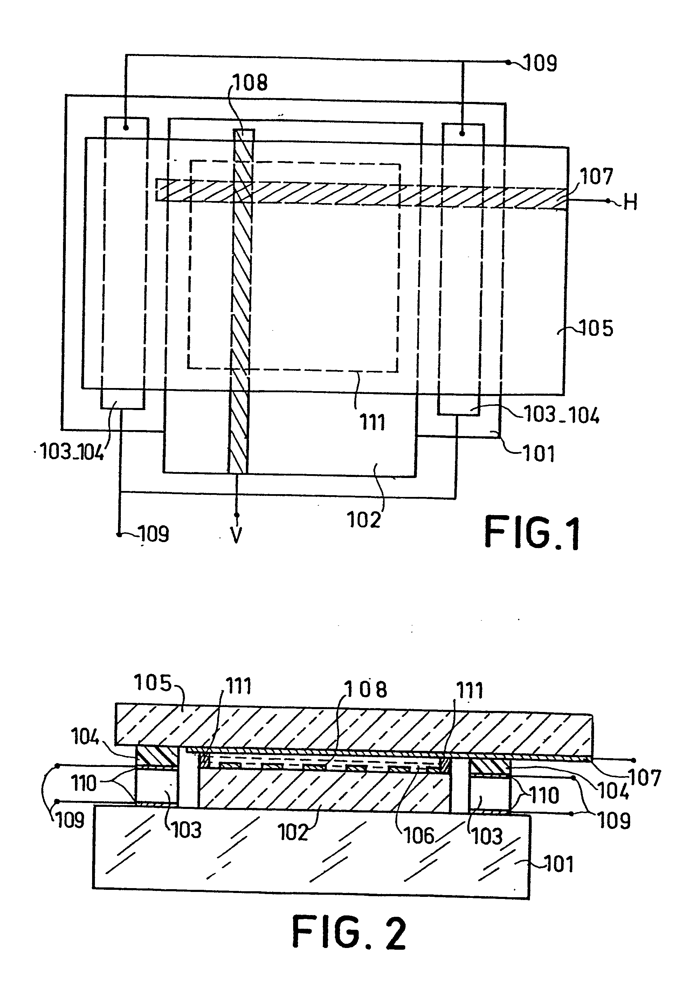

Le dispositif représenté sur les figures 1 et 2 comprend sur un substrat transparent 101 une lame de verre 102 et deux cales piézoélectriques 103. Cette lame de verre et ces cales piézoélectriques sont collées sur le substrat 101 par exemple à l'aide d'une colle cyanoacrylique. Pour obtenir une épaisseur bien définie de la couche de cristal liquide décrite plus loin, seules les surfaces en contact avec le substrat 101 sont polies avant le collage, les autres surfaces restant à l'état d'ébauche. Lorsque le collage est effectué on procède à un rodage de l'extrémité supérieure de la lame et des cales, qui permet d'amener ces extrémités dans un même plan de référence. On termine ensuite par un polissage optique.

Une deuxième lame de verre 105 délimite un espace avec la première lame 102, espace qui est rempli d'une couche de cristal liquide 106. L'épaisseur de cette couche de cristal liquide est déterminée par deux cales 104 qui reposent sur les cales piézoélectriques 103 et qui supportent la deuxième lame de verre 105. Ces cales 104 sont taillées par exemple dans une feuille de polytéréphtalate d'éthylène glycol. La couche est délimitée sur les bords par une couronne en matériau souple tel que par exemple du caoutchouc de silicone.

Un premier ensemble d'électrodes parallèles 107 est déposé sur la face inférieure de la lame 105. Il détermine avec un deuxième ensemble d'électrodes 108 déposé sur la face supérieure de la lame 102 un ensemble de points de croisement qui peuvent être adressés individuellement selon un adressage matriciel.

Ces électrodes transparentes sont réalisées par exemple avec un oxyde mixte d'indium et d'étain, et on n'a représenté sur la figure 1 qu'une seule électrode de chaque ensemble pour que cette figure soit plus lisible.

La couche de cristal liquide 106 est formée d'un cristal liquide maintenu dans un état smectique. L'épaisseur de cette couche est de l'ordre de quelques dizaines de microns. Ce cristal liquide peut être par exemple du 4-4' cyano-octyl-biphényl connu sous le nom de COB.

Les cales piézoélectriques 103 sont munies à leurs surfaces supérieure et inférieure d'électrodes 110 qui sont reliées à des connexions 109. En appliquant à ces connexions 109 un échelon de tension on fait varier l'épaisseur des cales 103. Cette variation d'épaisseur des cales 103 entraîne par l'intermédiaire des cales 104 le déplacement de la deuxième lame de verre 105. L'épaisseur de l'espace compris entre les lames de verre 102 et 105 augmente ainsi brusquement ce qui crée à l'intérieur de la lame de cristal liquide 106 des variations de pression et des mouvements tourbillonnaires dus au fait que le cristal liquide tend à remplir l'espace supplémentaire qui lui est offert.

Sous l'effet de ces mouvements tourbillonnaires et de ces variations de pression la structure homéotrope du liquide smectique ne peut subsister et celui-ci s'organise en un autre état fortement diffusant et très analogue à celui connu sous le nom de structure en conique focale. Cet état est stable et le retour lent de la lame 105 à sa position lorsque l'on supprime l'échelon de tension appliqué aux connexions 109 ne le modifie pas. Ainsi après l'application transitoire d'un échelon de tension sur les électrodes 110 le cristal liquide compris entre les lames de verre 105 et 102 est devenu diffusant dans la totalité de son volume.

On a ainsi effacé l'ensemble du dispositif qui se trouve donc prêt pour une nouvelle inscription.

Pour procéder à cette inscription, on applique aux électrodes 107 et 108, respectivement par les connexions H et V, des tensions électriques qui déterminent au point de croisement des électrodes un champ électrique appliqué à la couche de cristal liquide en ce point.

Sous l'effet de ce champ électrique le cristal liquide tend à se réorienter et à reprendre une structure transparente. Cet effet est surtout sensible dans les cristaux liquides présentant une anisotropie diélectrique positive, tels que le COB cité plus haut. Ces produits, en particulier le COB, présentent le plus souvent un seuil de réorientation qui permet un adressage matriciel tel que celui utilisé dans la réalisation ici décrite. Cet adressage peut se faire selon la technique classique dite en V/3V qui permet en appliquant au repos sur les électrodes verticales une tension V et sur les électrodes horizontales une tension 2V d'adresser un point quelconque en appliquant sur l'électrode verticale correspondante une tension 3V et sur l'électrode horizontale correspondante une tension nulle. La tension V est choisie pour être inférieure au seuil de réorientation, mais telle que la tension 3V soit supérieure à ce seuil. Ceci permet en outre une inscription ligne par ligne en appliquant à l'électrode correspondant à cette ligne une tension nulle et à l'ensemble des électrodes verticales correspondent aux colonnes un ensemble de tensions choisies entre les valeurs V et 3V et permettant de représenter l'ensemble des points visualisés sur la ligne adressée en totalité.

La phase transparente obtenue au point adressé est stable dans le temps, ce qui facilite d'ailleurs l'adressage matriciel. Ainsi donc le dispositif de visualisation est doté d'une mémoire intrinsèque et lorsque l'inscription à visualiser est effectivement inscrite dans la couche de cristal liquide elle y reste sans nécessité de rafraîchissement. Le dispositif ne consomme donc l'énergie électrique qu'au moment de l'inscription et de l'effacement.

Dans l'exemple décrit, la source lumineuse se trouve en dessous du substrat 101 et l'observateur au-dessus de la lame 105, le dispositif fonctionnant ainsi par transmission.

En utilisant pour les électrodes 108 un dépôt métallique réfléchissant, par exemple une couche d'aluminium, le dispositif fonctionnera par réflexion d'une source lumineuse située au-dessus de la lame de verre 105 vers un observateur situé au-dessus de cette lame de verre.

Dans une réalisation pratique, on a utilisé une épaisseur de 20 microns de COB. Pour cette épaisseur le seuil de réorientation est de 20 volts et la structure diffusante s'établit pour une dilatation rapide de 100 Angströms environ. La valeur relative de cette dilatation est suffisamment faible pour ne pas risquer de décollement de la couche de cristal liquide sur la surface des lames de verre qui l'enserrent. Pour réaliser les cales piézoélectriques 103 on a utilisé une céramique du type P4-68 dont la variation d'épaisseur est de 4,8 Angströms par volt et par millimètre avec une tension maximale de 600 volts par millimètre. La dilatation de 100 Angströms est donc obtenue avec une tension un peu supérieure à 100 volts, qui est largement compatible avec les transistors disponibles actuellement. L'apparition de la structure diffusante, et donc l'effacement, s'effectue en moins de 1 seconde.

Le temps de réponse pour l'inscription lorsqu'elle est faite ligne par ligne est de l'ordre de quelques dizaines de millisecondes. Cette cadence n'est pas très rapide mais la mémoire intrinsèque du dispositif permet de s'en contenter.

Cette mémoire intrinsèque et la possibilité de se contenter d'une entrée de l'information à cadence relativement lente permet en particulier d'utiliser un tel dispositif dans un terminal téléphonique où l'on souhaite afficher des informations numériques provenant par la ligne téléphonique à la vitesse usuelle de 1 200 Bauds. Un tel terminal permet par exemple d'afficher les informations correspondant à l'annuaire téléphonique consulté à distance à partir du clavier du terminal.

L'invention n'est pas limitée aux mouvements transversaux qui tendent à écarter les substrats de la cellule à cristal liquide. Elle s'étend à tous les mouvements des substrats qui permettent de briser la structure homéotrope et en particulier aux mouvements latéraux et aux vibrations.

## Revendications

1. Dispositif de visualisation à mémoire, du type comprenant une couche de cristal liquide smectique (106) pouvant prendre sous l'action de moyens d'effacement un état diffusant se transformant en un état transparent sous l'action réorientatrice d'un champ électrique, une première et une deuxième lames (102, 105) enserrant cette couche, au moins une seconde électrode (108) supportée par la face de la première lame (102) en contact du cristal liquide (106), et au moins une première électrode (107) supportée par la face de la deuxième lame (105) en contact du cristal liquide (106) et permettant avec la seconde électrode de soumettre une partie de la couche de cristal liquide à un champ électrique de réorientation, caractérisé en ce que lesdits moyens d'effacement sont des moyens électromécaniques (103) permettant de modifier transitoirement la position de la première lame (102) par rapport à la seconde (105) pour porter en totalité ladite couche de cristal liquide smectique (106) dans un état diffusant uniforme par un déplacement brusque créant une dépression brusque par augmentation de la distance entre lesdites lames ; ladite phase de dépression brusque étant suivie d'un retour lent à la position initiale de ladite première lame (102) par rapport à la seconde (105).

2. Dispositif selon la revendication 1, caractérisé en ce que les moyens (103) permettant de modifier la position relative des lames (102, 105) permettent de modifier l'épaisseur de la couche de cristal liquide (106).

3. Dispositif selon la revendication 2, caractérisé en ce que les moyens (103) permettant de faire varier l'épaisseur de la couche de cristal liquide (106) comprennent au moins une cale piézoélectrique munie d'électrodes (103, 110) permettant d'appliquer une tension pour faire varier son épaisseur.

4. Dispositif selon la revendication 3, caractérisé en ce qu'il comprend en outre un substrat (101) supportant la première lame (102) et la cale piézoélectrique (103, 110), et au moins une cale d'épaisseur (104) placée sur la cale piézoélectrique (103, 110) et supportant la deuxième lame (105) ; l'épaisseur de la cale piézoélectrique (103, 110) étant égale à celle de la première lame (102).

5. Dispositif selon l'une quelconque des revendications 1 à 4, caractérisé en ce que la première lame (102) supporte un second ensemble d'électrodes rectilignes et parallèles (108) comprenant la seconde électrode, et que la deuxième lame (105) supporte un premier ensemble d'électrodes rectilignes et parallèles (107) comprenant la première électrode ; ces deux ensembles d'électrodes étant croisés et permettant de définir un ensemble de points d'affichage susceptibles d'être adressé de manière matricielle.

6. Dispositif selon l'une quelconque des revendications 1 à 5, caractérisé en ce que les électrodes (107, 108) et les lames (102, 105) sont transparentes pour permettre une visualisation par transmission.

7. Dispositif selon l'une quelconque des revendications 1 à 5, caractérisé en ce que la deuxième lame (105) et la première électrode (107) sont transparentes et que la deuxième électrode (108) est réfléchissante pour permettre une visualisation à travers la deuxième lame (108) par réflexion sur cette deuxième électrode (108).

8. Utilisation d'un dispositif de visualisation selon l'une quelconque des revendications 1 à 7 dans un terminal téléphonique.

## Claims

1. Visualization storage display of the type comprising a smectic liquid crystal layer (106) adapted to assume a scattering state under the action of erasing means, said scattering state being transformed into a transparent state under the reorientation action of an electrical field, first and second sheets (102, 105) defining said layer, at least one second electrode (108) supported by the face of the first sheet (102) contacting the liquid crystal (106), and at least one first electrode (107) carried by the face of the second sheet (105) contacting the liquid crystal (106) and allowing, in combination with the second electrode, to expose a portion of the liquid crystal layer to an electrical reorientation field, characterized in that said erasing means are electromechanic means (103) allowing a transient modification of the relative position of the first sheet (102) with respect to the second sheet (105) for totally inducing said smectic liquid crystal layer (106) into a uniform scattering state by a sudden displacement causing a sudden depression by increasing the spacing between the sheets ; said step of sudden depression being followed by a slow return to the initial position of the first sheet (102) with respect to the second sheet (105).

2. Device in accordance with claim 1, characterized in that the means (103) for varying the relative positions of the sheets (102, 105) permit the thickness of the liquid crystal layer (106) to be modified.

3. Device in accordance with claim 2, characterized in that the means (103) permitting the thickness of the liquid crystal layer (106) to be varied comprise at least one piezoelectric shim provided with electrodes (103, 110) permitting a voltage to be applied for variation of its thickness.

4. Device in accordance with claim 3, characterized in that it further comprises a substrate (101) carrying the first sheet (102) and the piezoelectric shim (103, 110), and at least one spacing shim (104) located above the piezoelectric shim (103, 110) and carrying the second sheet (105) ; the thickness of the piezoelectric shim (103, 110) being equal to that of the first sheet (102).

5. Device in accordance with any of claims 1 to 4, characterized in that the first sheet (102) carries a second pattern of rectilinear and parallel electrodes (108) comprising the second electrode, and in that the second sheet (105) carries a first pattern of rectilinear and parallel electrodes (107) comprising the first electrode ; these two electrode patterns being crossed and permitting to define an array of display dots susceptible to be addressed in matrix fashion.

6. Device in accordance with any of claims 1 to 5, characterized in that the electrodes (107, 108) and the sheets (102, 105) are transparent to permit visualization by transmission.

7. Device in accordance with any of claims 1 to 5, characterized in that the second sheet (105) and the first electrode (107) are transparent and in that the second electrode (108) is reflective to permit visualization through the second sheet (108) by reflection on this second electrode (108).

8. Use of a visualization device in accordance with any of claims 1 to 7 in a telephone terminal.

**Ansprüche**

1. Speicheranzeigevorrichtung mit einer smektischen Flüssigkristallschicht (106), die unter der Einwirkung einer Löscheinrichtung einen streuenden Zustand annehmen kann, der sich unter der Ausrichtwirkung eines elektrischen Feldes in einen lichtdurchlässigen Zustand verwandelt, mit einer ersten und einer zweiten diese Schicht einspannenden Scheibe (102, 105), wenigstens einer zweiten Elektrode (108), die von derjenigen Fläche der ersten Scheibe (102) getragen wird, die mit dem Flüssigkristall (106) in Berührung ist, und wenigstens einer ersten Elektrode (107), die von derjenigen Fläche der zweiten Scheibe (105) getragen wird, die mit dem Flüssigkristall (106) in Kontakt ist, wobei diese erste Elektrode gemeinsam mit der zweiten Elektrode einen Teil der Flüssigkristallschicht einem ausrichtenden elektrischen feld aussetzt, dadurch gekennzeichnet, daß die Löscheinrichtung durch elektromechanische Mittel (103) gebildet ist, die es ermöglichen, vorübergehend die Position der ersten Scheibe (102) in bezug auf die zweite (105) zu verändern, um die gesamte smektische Flüssigkristallschicht (106) in einen gleichförmigen streuenden Zustand zu versetzen durch eine plötzliche Verlagerung, die einen abrupten Unterdruck erzeugt, indem der Abstand zwischen den Scheiben vergrößert wird ; wobei auf die Phase des plötzlichen Unterdrucks eine langsame Rückkehr in die Anfangsposition der ersten Scheibe (102) bezüglich der zweiten (105) folgt.

2. Vorrichtung nach Anspruch 1, dadurch gekennzeichnet, daß die Mittel (103) zum Verändern der Relativposition der Scheiben (102, 105) eine Veränderung der Dicke der Flüssigkristallschicht (106) ermöglichen.

3. Vorrichtung nach Anspruch 2, dadurch gekennzeichnet, daß die Mittel (103) zum Verändern der Dicke der Flüssigkristallschicht (106) wenigstens ein piezoelektrisches Zwischenstück enthalten, das mit Elektroden (103, 110) versehen ist, die es ermöglichen, eine Spannung zum Verändern der Dicke dieses Zwischenstücks anzulegen.

4. Vorrichtung nach Anspruch 3, dadurch gekennzeichnet, daß sie ferner ein die erste Scheibe (102) und das piezoelektrische Zwischenstück (103, 110) tragendes Substrat (101) und wenigstens ein Abstandsstück (104) umfaßt, das auf dem piezoelektrischen Zwischenstück (103, 110) angeordnet ist und die zweite Scheibe (105) trägt ; wobei die Dicke des piezoelektrischen Zwischenstücks (103, 110) gleich derjenigen der ersten Scheibe (102) ist.

5. Vorrichtung nach einem der Ansprüche 1 bis 4, dadurch gekennzeichnet, daß die erste Scheibe (102) eine zweite Gruppe von geradlinigen und parallelen Elektroden (108) trägt, welche die zweite Elektrode enthalten, und daß die zweite Scheibe (105) eine erste Gruppe von geradlinigen und parallelen Elektroden (107) trägt, welche die erste Elektrode enthalten ; wobei diese beiden Elektrodengruppen gekreuzt sind und eine Menge von Anzeigepunkten definieren, die matrixartig adressierbar sind.

6. Vorrichtung nach einem der Ansprüche 1 bis 5, dadurch gekennzeichnet, daß die Elektroden (107, 108) und die Scheiben (102, 105) lichtdurchlässig sind und das Auslesen in transmission gestatten.

7. Vorrichtung nach einem der Ansprüche 1 bis 5, dadurch gekennzeichnet, daß die zweite Scheibe (105) und die erste Elektrode (107) lichtdurchlässig sind und daß die zweite Elektrode (108) reflektierend ist, um ein Auslesen durch die zweite Scheibe (108) hindurch durch Reflektion an dieser zweiten Elektrode (108) zu ermöglichen.

8. Verwendung einer Anzeigevorrichtung nach einem der Ansprüche 1 bis 7 in einem Telefonterminal.

FIG.1

FIG. 2

1